# FASCICULE DE BREVET EUROPEEN

(11) **EP 1 300 337 B1**
(45) Date de publication et mention de la délivrance du brevet: **17.03.2004**
(21) Numéro de dépôt: 02292424.5
(22) Date de dépôt: 03.10.2002
(51) Int. Cl.: B64D 27/26

(54) **Suspension de turboréacteur**
Aufhängungsvorrichtung für ein Turbinentriebwerk
Mounting device for a turbojet engine

(30) Priorité: 04.10.2001 FR 0112736
(43) Date de publication de la demande: 09.04.2003
(73) Titulaire: SNECMA MOTEURS, 75015 Paris (FR)
(72) Inventeur: Huet, Patrick, 91090 Lisses (FR); Pasquer, Félix - Jean-Claude, 77127 Lieusaint (FR); Brefort, Francois, 77540 Bernay (FR)

(56) Documents cités:
- EP-A- 0 303 405
- EP-A- 1 053 938
- FR-A- 2 770 486
- US-A- 5 921 500

## Description

Le sujet de cette invention est une suspension de turboréacteur d'aéronef.

Un genre courant de suspension comprend une paire de dispositifs d'accrochage à l'avant et à l'arrière du réacteur, chacun fixé à un mât de l'aéronef, et une paire de bielles intermédiaires sensiblement longitudinales dont une fonction est d'assurer une bonne répartition des efforts dans les deux dispositifs d'accrochage pour que le dispositif d'accrochage à l'arrière transmette à son mât les efforts transversaux et verticaux et le couple autour de l'axe longitudinal en plus de la poussée du moteur, qui est exercée d'abord sur la suspension avant.

Ce dispositif d'accrochage à l'arrière est ainsi soumis à de multiples efforts statiques et dynamiques qui entraînent un risque élevé de le rompre. Si une rupture y apparaît, d'autres dégâts peuvent s'ensuivre.

Des fissurations par fatigue peuvent ainsi apparaître sur la pièce maîtresse du dispositif d'accrochage, qui s'étend sur le mât et vers laquelle les bielles longitudinales et des biellettes inférieures portant le réacteur convergent. Cette pièce maîtresse est fixée généralement au mât par quatre vis réparties en rectangle. Si la forme de fatigue progresse jusqu'à couper la pièce maîtresse ou à isoler certaines des vis, la transmission des forces ne se fait plus que par les autres vis, ce qui est évidemment très défavorable. On a eu l'idée de fendre la pièce maîtresse en deux parties entre lesquelles les vis sont réparties de façon qu'une fissure s'arrête sur la fente.

Cette disposition s'oppose bien à la rupture de la pièce maîtresse, mais elle impose d'unir les deux portions séparées par la fente par des boulons qui accroissent beaucoup le poids de la suspension. Une suspension de ce genre est décrite dans le brevet français 2 680 353, où la pièce maîtresse est non seulement divisée mais dédoublée pour que chacune de ses parties puisse résister seule aux efforts : son poids est alors encore plus grand.

Une suspension de ce genre est aussi connue de FR-A-2 770 486, qui montre toutes les caractéristiques du préambule de la revendication indépendante.

Le risque de rupture par fatigue concerne les vis de fixation mêmes. On doit prendre certaines précautions comme la limitation de l'effort de serrage qu'on leur applique au montage, pour réduire ce risque.

L'objet de l'invention est de suppléer à des vis rendues hors d'usage par au moins un pion traversant au moins partiellement la pièce maîtresse du dispositif d'accrochage et le mât et qui reprend la transmission des efforts. Le pion est constitué de façon à ne pas subir d'efforts dynamiques importants auparavant, ce qui écarte le risque de l'avoir rompu par fatigue.

L'invention est précisément relative à une suspension de réacteur comprenant un dispositif d'accrochage à une structure fixe comprenant une pièce maîtresse fixable à la structure et un pion vertical pour relier la pièce maîtresse à la structure fixe, caracterisée en ce que le pion vertical présente un épaulement médian posé sur la pièce maîtresse, un épaulement supérieur au-dessus d'une portion de la structure fixe, et un épaulement inférieur entre lequel et l'épaulement médian la pièce principale est comprimée.

Avantageusement, l'épaulement inférieur et l'épaulement supérieur sont formés par des écrous engagés sur des portions extrêmes filetées du pion, un dispositif d'arrêt de rotation de l'écrou de l'épaulement supérieur étant ajouté.

On passe maintenant aux commentaires des figures pour décrire dans le détail une réalisation particulière de l'invention :
- la figure 1 est une vue générale de la suspension ;

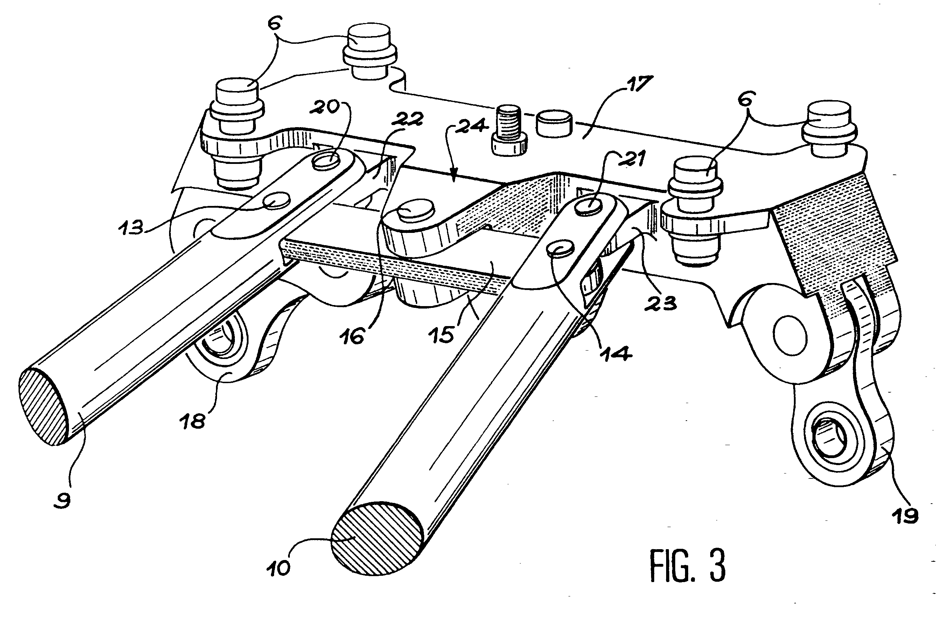

- les figures 2 et 3 représentent le dispositif de suspension arrière sans et avec les bielles ; et
- la figure 4 illustre un pion de soutien du dispositif d'accrochage.

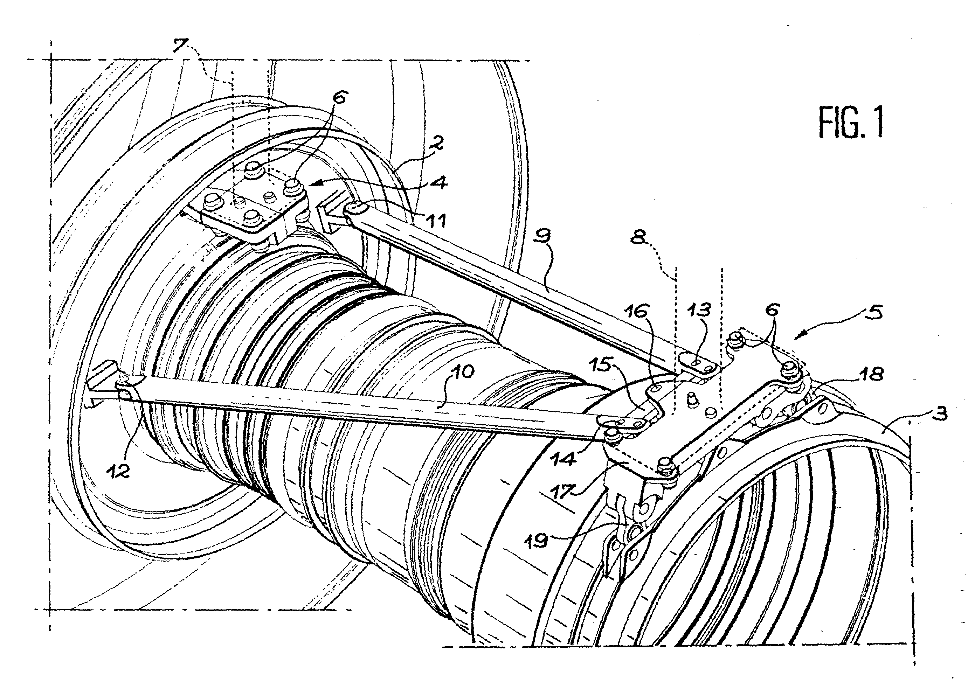

Le turboréacteur 1 illustré à la figure 1 et dont seule l'enveloppe a été représentée comprend en particulier un carter intermédiaire 2 situé vers l'avant et un carter d'échappement 3 situé vers l'arrière, que portent respectivement un dispositif d'accrochage avant 4 et un dispositif d'accrochage arrière 5. Des boulons globalement référencés par 6 servent à fixer les dispositifs d'accrochage 4 et 5 sous des mâts 7 et 8 ou d'autres structures fixes d'un aéronef. Une paire de bielles 9 et 10 relie les dispositifs d'accrochage 4 et 5. Elles sont à peu près longitudinales et pourvues à leurs extrémités avant d'articulations 11 et 12 dépendant du carter intermédiaire 2 et à leurs extrémités arrière d'articulations 13 et 14 dépendant d'un palonnier 15, c'est-à-dire d'un levier basculant dont le milieu est articulé par un axe central 16 à une ferrure 17 qui forme la pièce maîtresse du dispositif d'accrochage arrière 5 et qui soutient, par l'intermédiaire de biellettes latérales 18 et 19, le carter d'échappement 3.

Les bielles 9 et 10 sont prolongées vers la ferrure 17 et reliées à elle par des articulations supplémentaires 20 et 21 situées sur des oreilles 22 et 23, établies sur la ferrure 17 de part et d'autre d'une chape centrale 24 qui porte l'axe 16 central du palonnier 15.

Les articulations 13 et 14 des bielles 9 et 10 au palonnier 15 ont un jeu réduit, mais les articulations supplémentaires 20 et 21 à la ferrure 17 ont un jeu plus large qui leur permet de rester inactives, c'est-à-dire de ne pas transmettre d'effort, en temps normal : la transmission de la poussée et des autres forces se fait entièrement par le palonnier 15, mais si celui-ci, son axe 16 ou la chape centrale 24 se rompt, les bielles 9 et 10, cédant à la force de poussée, se déplacent longitudinalement et les articulations supplémentaires 20 et 21 entrent en butée, rétablissant la transmission de l'effort à la ferrure 17. Il en va de même si une bielle, 10 par exemple, se rompt, la transmission des efforts s'effectuant alors par l'articulation supplémentaire 20 de l'autre bielle 9 et par l'axe central 16. Si enfin un axe d'une articulation 13 ou 14 au palonnier 15 se rompt, le palonnier 15 devient inactif mais la transmission des efforts est encore assurée par les axes supplémentaires 20 et 21. Dans toutes ces situations, la répartition des efforts n'est que peu modifiée en comparaison des conditions normales. L'assemblage reste isostatique et ne permet donc pas de développer des contraintes imprévues.

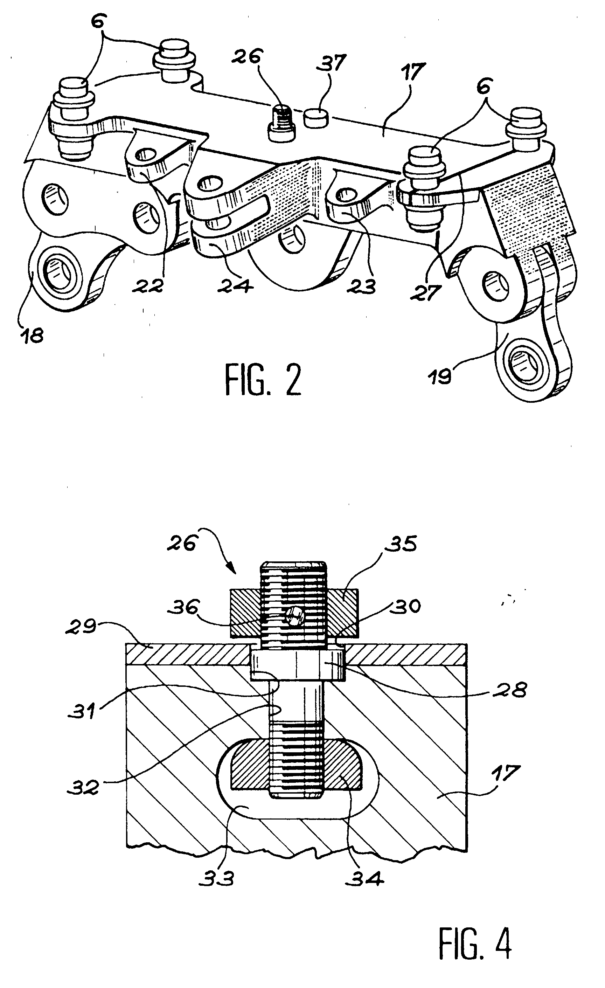

Le dispositif caractéristique de l'invention sera maintenant décrit à l'aide principalement de la figure 4. Il s'agit d'un pion 26 vertical situé sensiblement au centre de la ferrure 17 et qui sert à maintenir la plaque 29 sur la ferrure contre les mouvements dans les directions horizontales ; mais sa forme particulière, qu'on va bientôt décrire, lui permet d'intervenir utilement quand une fissure 27 esquissée à la figure 2 et produite par la fatigue coupe la ferrure 17 en deux en passant par exemple à travers les perçages de deux vis 6 de suspension situées d'un même côté. La transmission des efforts au mât 8 n'est alors plus assurée par ces vis, mais le pion 26 allége la charge sur les vis 6 restant actives, par sa présence même et aussi en permettant une répartition meilleure des efforts dans la ferrure 17.

Le pion 26 présente un épaulement médian 28 qui est engagé en partie dans un perçage d'une plaque 29 appartenant au mât 8 et pour le reste à un lamage 31 d'un perçage de plus petit diamètre traversant une partie de la ferrure 17 jusqu'à une chambre 33. L'épaulement 28 médian est engagé dans le perçage 30 et le lamage 31 avec peu de jeu. Le pion 26 comprend encore un épaulement inférieur et un épaulement supérieur, qui sont constitués par des écrous 34 et 35 engagés sur des extrémités filetées du pion 26. Si cependant l'écrou inférieur 34 est serré contre la ferrure 17 au sommet de la chambre 33, l'écrou supérieur 35 est séparé de la plaque 29 par un petit jeu, qu'une goupille 36 coupant l'écrou 35 et le pion 26 maintient en empêchant l'écrou 35 de tourner.

Quand la fissure 27 a mis hors service une partie des vis 6, la ferrure 17 s'affaisse, entraînant le pion 26 vers le bas jusqu'à ce que l'écrou supérieur 35 touche la plaque 29, ce qui arrête le mouvement d'affaissement : le pion 26 soutient alors la poutre 17.

L'épaulement médian 28 est aussi avantageux pour transmettre les efforts horizontaux de la ferrure 17 à la plaque 29, car sa section plus grande lui fait subir des contraintes moindres.

Le pion 26 peut être épaulé par un pion supplémentaire 37 placé non loin de lui au centre de la ferrure 17 et qui se présente comme un pion classique, traversant la ferrure 17 et la plaque 29 et comprenant des épaulements supérieur et inférieur semblables à ceux du pion 26, mais pas d'épaulement médian. Des jeux circulaires et longitudinaux subsistent entre le pion 37, la ferrure 17 et la plaque 29. Les pions 26 et 37 ne sont pas sollicités avant l'apparition de la figure 27, sauf par un effort de traction dans le pion 26 entre les épaulements médian 28 et inférieur 34, mais qui est un effort de serrage invariable et donc incapable de produire une fissure par fatigue, et par un effort horizontal de cisaillement à l'épaulement médian 28, mais qui est modéré en raison de la largeur de celui-ci. Si cependant le pion 26 se rompt, le pion 37, déchargé jusqu'alors des efforts horizontaux grâce au jeu de montage, le remplace dans sa fonction de maintenir de la plaque 29 sur une ferrure 17 dans les directions horizontales.

## Revendications

1. Suspension de turboréacteur comprenant un dispositif d'accrochage (5) à une structure fixe (8) comprenant une pièce maîtresse (17) fixable à la structure fixe (8) et un pion vertical (26) pour relier la pièce maîtresse (17) à la structure fixe (8), **caractérisée en ce que** le pion vertical (26) présente un épaulement médian (28) posé sur la pièce maîtresse (17), un épaulement supérieur (35) au-dessus d'une portion (29) de la structure fixe, et un épaulement inférieur (34) entre lequel et l'épaulement médian la pièce maîtresse (17) est comprimée.

2. Suspension de turboréacteur selon la revendication 1, **caractérisé en ce que** l'épaulement inférieur et l'épaulement supérieur sont formés par des écrous engagés sur des portions extrêmes filetées du pion, un dispositif d'arrêt de rotation (36) de l'écrou de l'épaulement supérieur étant ajouté.

3. Suspension de turboréacteur selon l'une quelconque des revendications 1 ou 2, **caractérisée en ce qu'**elle comprend un second pion vertical (37) pour relier la pièce maîtresse et la structure fixe.

## Patentansprüche

1. Aufhängung für ein Turbotriebwerk, die eine Haltevorrichtung (5) zur Befestigung an einem festen Aufbau (8) umfasst, die ein Hauptteil (17), das an dem Aufbau (8) befestigt werden kann, und einen vertikalen Zapfen (26), der das Hauptteil (17) mit dem festen Aufbau (8) verbindet, aufweist,
**dadurch gekennzeichnet,**
**dass** der vertikale Zapfen (26) einen mittleren Absatz (28), der auf dem Hauptteil (17) aufliegt, einen oberen Absatz (35) oberhalb eines Abschnitts (29) des festen Aufbaus und einen unteren Absatz (34) aufweist, wobei das Hauptteil (17) zwischen dem unteren Absatz und dem mittleren Absatz zusammengedrückt wird.

2. Aufhängung für ein Turbotriebwerk nach Anspruch 1,
**dadurch gekennzeichnet,**
**dass** der untere Absatz (34) und der obere Absatz (35) von Muttern gebildet werden, die auf End-Gewindeabschnitten des Zapfens (26) in Eingriff sind, wobei eine Drehsperrvorrichtung (36) für die Mutter des oberen Absatzes hinzugefügt wird.

3. Aufhängung für ein Turbotriebwerk nach einem der Ansprüche 1 oder 2,
**dadurch gekennzeichnet,**
**dass** sie einen zweiten Zapfen (37) aufweist, um das Hauptteil (17) und den festen Aufbau (8) miteinander zu verbinden.

## Claims

1. Jet engine suspension comprising a device (5) for attachment to a fixed structure (8), comprising a master component (17) that can be fixed to the fixed structure (8) and a vertical peg (26) for connecting the master component (17) to the fixed structure (8), **characterized in that** the vertical peg (26) exhibits a central shoulder (28) placed on the master component (17), an upper shoulder (35) above a portion (29) of the fixed structure, and a lower shoulder (34) between which and the central shoulder the master component (17) is compressed.

2. Jet engine suspension according to Claim 1, **characterized in that** the lower shoulder and the upper shoulder are formed by nuts engaged on threaded end portions of the peg, a device (36) for preventing the nut of the upper shoulder from rotating being added.

3. Jet engine suspension according to either one of Claims 1 and 2, **characterized in that** it comprises a second vertical peg (37) for connecting the master component and the fixed structure.
